# EUROPEAN PATENT APPLICATION

(11) **EP 4 852 480 A1**
(43) Date of publication of application: **09.12.2026**
(21) Application number: 24922179.7
(22) Date of filing: 02.02.2024
(51) Int. Cl.: H04W 12/0431, H04W 12/069

(54) **NETWORK NODE AND COMMUNICATION METHOD**

(71) Applicant: NTT DOCOMO, INC., Tokyo 100-6150 (JP)
(72) Inventor: KUNO, Yuuya, Tokyo 100-6150 (JP)
(74) Representative: Hoffmann Eitle
(86) International application number: PCT/JP2024/003596
(87) International publication number: WO 2025/163920

(57) **Abstract**

A network node includes: a reception unit configured to receive, from a first network node, identification information of a secret key or identification information of a cryptographic primitive; a control unit configured to determine validity of the secret key or the cryptographic primitive based on advance information received from a second network node; and a transmission unit configured to transmit a determination result by the control unit to the first network node.

## Description

### Technical Field

The present invention relates to a network node and a communication method in a communication system.

### Background Art

In 3GPP (registered trademark) (3rd Generation Partnership Project), studies are underway on a radio communication system called 5G or NR (New Radio) (hereinafter, this radio communication system is referred to as "5G" or "NR") in order to achieve a further increase in system capacity, a further increase in data transmission speed, a further reduction in latency in radio sections, and the like. In 5G, various radio technologies are being studied in order to satisfy the requirement of achieving a throughput of 10 Gbps or more while reducing the latency in a radio section to 1 ms or less. In addition, in 5G, 5GC (5G Core Network), which is a core network, has been introduced (for example, Non-Patent Literature 1).

Not limited to 5G, encrypted communication using PKI (Public Key Infrastructure) or the like is generally performed in order to enhance communication security. Since a certificate used in PKI or the like may be revoked before its expiration date for security reasons, when the certificate is used, it is necessary to confirm that the certificate has not been revoked. As a technique therefor, for example, an on-demand certificate validity confirmation technique such as OCSP (X.509 Internet Public Key Infrastructure Online Certificate Status Protocol) is known.

In an on-demand certificate validity confirmation technique, traffic generated by that technique may burden the original traffic of the communication itself. Therefore, studies are underway on short-lived certificates for which on-demand certificate validity confirmation is not performed. A short-lived certificate is a certificate having a short validity period.

### Citation List

### Non-Patent Literature

[Non-Patent Literature 1] 3GPP TS 23.501 V18.1.0 (2023-03)

### Summary of Invention

### Technical Problem

As described above, for short-lived certificates, on-demand certificate validity confirmation is not performed. Therefore, even if a secret key or a cryptographic primitive corresponding to a short-lived certificate is compromised, there is a possibility that the secret key or the cryptographic primitive cannot be appropriately invalidated or its use cannot be appropriately suppressed. It should be noted that, even for certificates not limited to short-lived certificates, when on-demand certificate validity confirmation is not performed or the like, the same problem as that of short-lived certificates may arise.

The present invention has been made in view of the above points, and an object of the present invention is to provide a technique that makes it possible for a network node to appropriately control use of a secret key or a cryptographic primitive.

### Solution to Problem

According to the disclosed technique, there is provided a network node including:
a reception unit configured to receive, from a first network node, identification information of a secret key or identification information of a cryptographic primitive;
a control unit configured to determine validity of the secret key or the cryptographic primitive based on advance information received from a second network node; and
a transmission unit configured to transmit a determination result by the control unit to the first network node.

### Advantageous Effects of Invention

According to the disclosed technique, there is provided a technique that makes it possible for a network node to appropriately control use of a secret key or a cryptographic primitive.

### Brief Description of Drawings

[FIG. 1] FIG. 1 is a diagram for explaining an example of a communication system.
[FIG. 2] FIG. 2 is a diagram for explaining an example of a communication system in a roaming environment.
[FIG. 3] FIG. 3 is a diagram for explaining an outline of an embodiment according to the present invention.
[FIG. 4] FIG. 4 is a diagram for explaining processing procedures in first to third embodiments.
[FIG. 5] FIG. 5 is a diagram for explaining an example of rollback.
[FIG. 6] FIG. 6 is a diagram illustrating an example of a functional configuration of a network node 100 in an embodiment of the present invention.
[FIG. 7] FIG. 7 is a diagram illustrating an example of a functional configuration of a terminal 200 in an embodiment of the present invention.
[FIG. 8] FIG. 8 is a diagram illustrating an example of a hardware configuration of the network node 100 and the terminal 200 in an embodiment of the present invention.
[FIG. 9] FIG. 9 is a diagram illustrating an example of a configuration of a vehicle 2001 in an embodiment of the present invention.

### Description of Embodiments

Embodiments of the present invention will be described below with reference to the drawings. It should be noted that the embodiments described below are merely examples, and the embodiments to which the present invention is applied are not limited to the embodiments below.

In operation of the radio communication system according to the embodiments of the present invention, existing technologies are used as appropriate. However, such existing technologies are, for example, existing LTE or NR, but are not limited to existing LTE or NR.

In the present embodiment, a technique relating to a determination as to whether to use a secret key or a cryptographic primitive corresponding to a certificate in an environment in which a short-lived certificate is applied will be described.

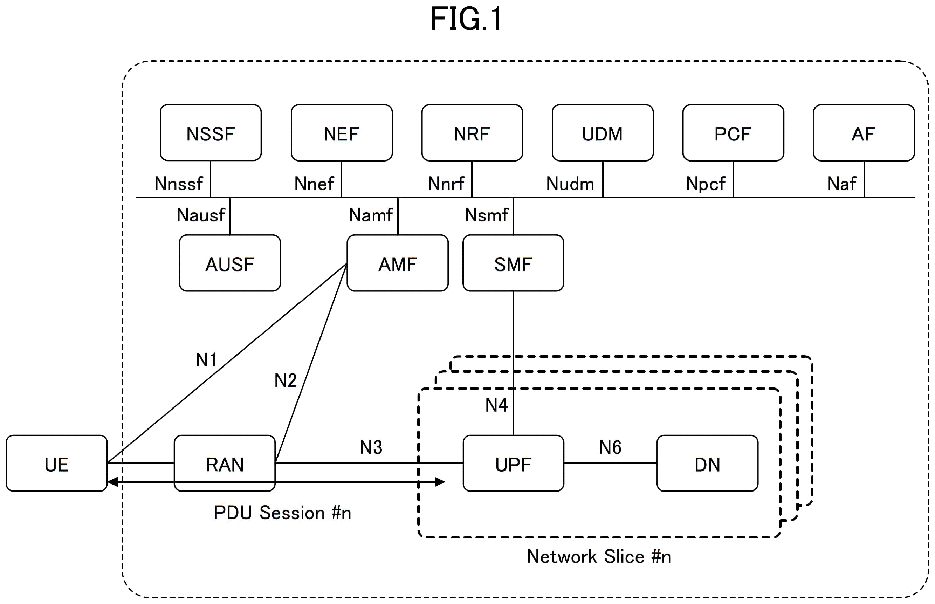

First, as an example of a communication system in which encrypted communication using a short-lived certificate may be performed, a 5G communication system (network) will be described. FIG. 1 is a diagram for explaining an example of the communication system. As illustrated in FIG. 1, the communication system includes UE, which is a terminal, and a plurality of network nodes. Hereinafter, it is assumed that one network node corresponds to each function, but one network node may implement a plurality of functions, or a plurality of network nodes may implement one function. Further, "connection" described below may be a logical connection or a physical connection.

A RAN (Radio Access Network) is a network node having a radio access function, may include a base station, and is connected to UE, an AMF (Access and Mobility Management Function), and a UPF (User plane function). The AMF is a network node having functions such as termination of a RAN interface, termination of NAS (Non-Access Stratum), registration management, connection management, reachability management, mobility management, and the like. The UPF is a network node having functions such as a PDU (Protocol Data Unit) session point for an external network interconnected with a DN (Data Network), packet routing and forwarding, user-plane QoS (Quality of Service) handling, and the like. The UPF and the DN constitute a network slice. In the radio communication network according to the embodiment of the present invention, a plurality of network slices are constructed.

The AMF is connected to the UE, the RAN, an SMF (Session Management function), an NSSF (Network Slice Selection Function), a NEF (Network Exposure Function), an NRF (Network Repository Function), a UDM (Unified Data Management), an AUSF (Authentication Server Function), a PCF (Policy Control Function), and an AF (Application Function). The AMF, the SMF, the NSSF, the NEF, the NRF, the UDM, the AUSF, the PCF, and the AF are network nodes mutually connected via interfaces based on respective services, namely Namf, Nsmf, Nnssf, Nnef, Nnrf, Nudm, Nausf, Npcf, and Naf.

The SMF is a network node having functions such as session management, IP (Internet Protocol) address allocation and management for the UE, a DHCP (Dynamic Host Configuration Protocol) function, an ARP (Address Resolution Protocol) proxy, a roaming function, and the like. The NEF is a network node having a function of notifying capabilities and events to other NFs (Network Functions). The NSSF is a network node having functions such as selection of a network slice to which UE connects, determination of allowed NSSAI (Network Slice Selection Assistance Information), determination of configured NSSAI, determination of an AMF set to which UE connects, and the like. The PCF is a network node having a function of performing policy control of the network. The AF is a network node having a function of controlling an application server. The NRF is a network node having a function of discovering NF instances that provide services. The UDM is a network node that manages subscriber data and authentication data. The UDM is connected to a UDR (User Data Repository) that stores the data.

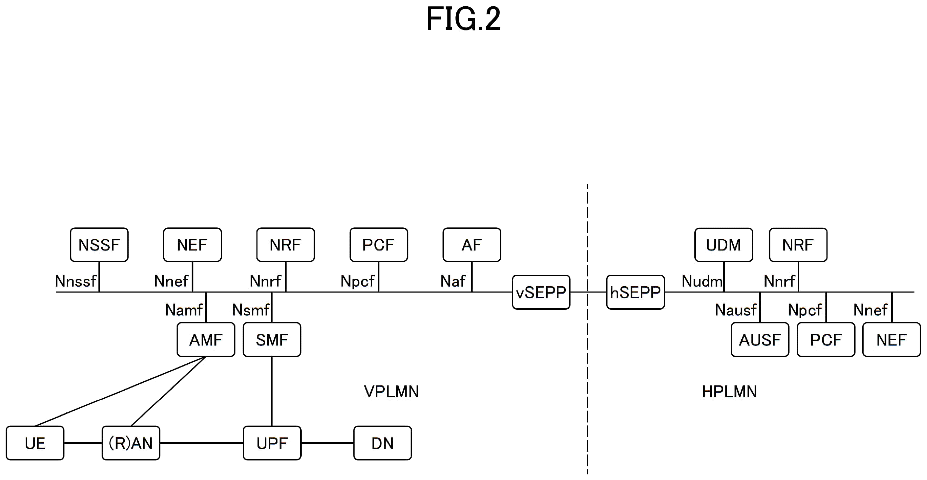

FIG. 2 is a diagram for explaining an example of a communication system in a roaming environment. As illustrated in FIG. 2, the network includes a UE and a plurality of network nodes.

An SEPP is a non-transparent proxy and filters control-plane messages between PLMNs (Public Land Mobile Networks). The vSEPP shown in FIG. 2 is the SEPP in a visited network, and the hSEPP is the SEPP in a home network.

As illustrated in FIG. 2, the UE is in a roaming environment in which the UE is connected to a RAN and an AMF in a VPLMN (Visited PLMN). The VPLMN and an HPLMN (Home PLMN) are connected via the vSEPP and the hSEPP. The UE can communicate with, for example, the UDM of the HPLMN via the AMF of the VPLMN.

### (Regarding Short-Lived Certificates and Remote Attestation)

As described above, in a technique such as OCSP, in which certificate validity confirmation is performed on demand, traffic generated by that technique may burden the original traffic of the communication itself. Therefore, studies are underway on short-lived certificates for which on-demand certificate validity confirmation is not performed (for example, E. Topalovic, B. Saeta, L.S. Huang, C. Jackson, and D. Boneh, "Towards Short-Lived Certificates," IEEE Oakland Web 2.0 Security and Privacy (W2SP 2012), May 2012, https://www.ieee-security.org/TC/W2SP/2012/papers/w2sp12-final9.pdf).

On the other hand, as use of the cloud has advanced, a Zero Trust Architecture (hereinafter referred to as "ZTA") has been proposed in cloud security. Unlike conventional perimeter security, ZTA is a usage form involving some type of confirmation/authentication with respect to resources and the like in a cloud environment. For example, when a secret key or the like is used, Remote Attestation is a typical technique for performing confirmation/authentication. Remote Attestation is disclosed in, for example, "Henk Birkholz, et al., 'Remote ATtestation procedureS (RATS) Architecture,' RFC 9334, January 2023, https://datatracker.ietf.org/doc/html/rfc9334."

For short-lived certificates, on-demand certificate validity confirmation is not performed. Therefore, even if a secret key or a cryptographic primitive corresponding to a short-lived certificate is compromised, there is a possibility that the secret key or the cryptographic primitive cannot be appropriately invalidated or its use cannot be appropriately suppressed.

In particular, in migrating to cryptographic primitives resistant to quantum computers expected in the future, it is important to address compromise of such cryptographic primitives, and it is necessary to address such compromise efficiently while maintaining service continuity.

As described above, by use of short-lived certificates, it is possible to suppress OCSP traffic. However, there is a problem in that it is not possible to appropriately control use of a secret key or a cryptographic primitive when, for example, the secret key or the cryptographic primitive becomes compromised.

For example, when migrating to PQC (Post-Quantum Cryptography), a certificate of a PKI (hereinafter referred to as "TasC-PKI") configured by a conventional cryptographic scheme (hereinafter referred to as "TasC: Traditional asymmetric key Cipher"), and a certificate of a PKI (hereinafter referred to as "PQC-PKI") configured by PQC, need to coexist in a terminal (for example, a PC) in order to maintain service continuity.

When a certain terminal migrates from use of a TasC-PKI certificate to use of a PQC-PKI certificate, if a defect occurs in the PQC-PKI environment (for example, a defect due to compromise), it is necessary to promptly return to the TasC-PKI environment and minimize interruption of service. However, in the related art, it is difficult to appropriately control such use.

### (Outline of Embodiments)

Below, first to third embodiments of a technique for solving the above problem will be described. First, an outline of the embodiments will be described. In the following description, unless it is clear from the context that another meaning is intended, "A/B" means "A or B." Further, "A or B" includes A only, B only, and "A and B."

In the present embodiment, it is assumed that communication is performed using short-lived certificates in a communication system including a plurality of network nodes. Hereinafter, "certificate" is assumed to be a short-lived certificate. However, the scope of application of the technique according to the present invention is not limited to short-lived certificates. The technique according to the present invention can also be applied to certificates other than short-lived certificates.

The network node may be a terminal, may be a server, may be a base station, or may be a node other than these.

Communication using short-lived certificates includes, for example, the following examples (1) to (3).
(1) A network node A acquires a certificate of a network node B, encrypts data with a public key included in the certificate, transmits the encrypted data to the network node B, and the network node B decrypts the data with its own secret key.
(2) A network node A signs data with its own secret key, and transmits the data and the signature to a network node B. The network node B acquires a certificate of the network node A and verifies the signature using a public key included in the certificate.
(3) A network node A acquires a certificate of a network node B, verifies trustworthiness of the certificate, shares a common key, and performs encrypted communication between the network node A and the network node B using the common key.

In the present embodiment, verification of a secret key/cryptographic primitive is performed by using a framework of Remote Attestation (hereinafter referred to as "RA"). The cryptographic primitive is, for example, information described in "Subject Public Key Info" or the like in a certificate. Performing verification of a secret key/cryptographic primitive associated with a certificate may also be expressed as verifying the certificate.

Further, the above "verification" includes checking soundness, checking whether compromise has occurred, checking whether use is permitted, checking validity/invalidity, and the like.

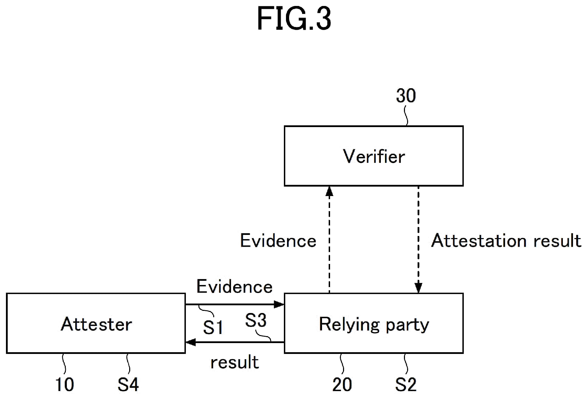

FIG. 3 illustrates an example of a configuration of a verification system according to the present embodiment. As illustrated in FIG. 3, the communication system includes an Attester 10, a Relying party 20, and a Verifier 30. The Attester 10, the Relying party 20, and the Verifier 30 are each connected to a network and can communicate with other apparatuses.

The Attester 10, the Relying party 20, and the Verifier 30 are each network nodes including a communication function. The Attester 10, the Relying party 20, and the Verifier 30 may each be any type of network node, and may be, for example, a terminal, a base station, a server, or a virtual machine on a cloud.

In a general RA framework, the Attester 10 is an apparatus that wants to prove that it is a trustworthy apparatus, the Relying party 20 is an apparatus that wants to confirm that the Attester 10 is a trustworthy apparatus, and the Verifier 30 is an apparatus that mediates verification of trustworthiness between the Attester 10 and the Relying party 20.

In a general RA framework (for example, a background-check model), the Attester 10 presents, to the Relying Party 20, Evidence that its environment is trustworthy, and the Relying Party 20 presents, to the Verifier 30, the Evidence received from the Attester 10.

The Verifier 30 verifies the Evidence received from the Relying Party 20 and presents, to the Relying party 20, an Attestation result indicating that the Attester 10 that presented the Evidence is trustworthy. The Relying Party 20 checks the Attestation result presented by the Verifier 30 and returns a result to the Attester 10.

In the present embodiment, unlike the above-described general RA framework, the Relying Party 20 does not perform the above-described real-time communication with the Verifier 30 (communication is suppressed), and the Relying Party 20 acquires in advance, from the Verifier 30, information necessary for verification of a secret key/cryptographic primitive. As a result, traffic between the Relying Party 20 and the Verifier 30 can be reduced.

Further, the Relying Party 20 in the present embodiment can make a determination specialized for the Attester 10 for each service or for each authentication domain such as a PKI. For example, even if a cryptographic primitive in a certain certificate is compromised, it is possible to determine that use of the secret key is permitted if the purpose is other than encryption (for example, pseudorandom number generation).

With reference to FIG. 3, an outline of the operation of the verification system according to the present embodiment will be described. Here, it is assumed that the Relying party 20 has already received and stored advance information (advance instructions) from the Verifier 30.

In S1, the Attester 10 transmits, to the Relying party 20 as Evidence, "information regarding a secret key or information regarding a cryptographic primitive" relating to a certificate to be verified. In S2, the Relying Party 20 performs verification with reference to the advance information from the Verifier 30. The verification result is, for example, a result indicating whether use of the secret key/cryptographic primitive is permitted.

In S3, the Relying Party 20 returns the verification result to the Attester 10. In S4, the Attester 10 determines, based on the received verification result, whether to use the secret key/cryptographic primitive.

The Relying Party 20 and the Attester 10 may be configured as one apparatus (network node). In this case, the network node can itself determine whether use of the secret key/cryptographic primitive is permitted based on the advance information received from the Verifier 30.

Further, in the present embodiment, an example has been described in which the technique according to the present invention is implemented in an RA framework, but the technique according to the present invention can also be implemented without using RA.

Each embodiment will be described below.

### (First Embodiment)

First, the first embodiment will be described. In the case of a short-lived certificate assumed to be used in each embodiment, on-demand certificate revocation confirmation is not performed. Therefore, a problem may arise when an unpredictable factor causing compromise of a secret key/cryptographic primitive occurs.

Further, in consideration of future migration to PQC and the like, it is desirable to provide a mechanism for shifting a currently used secret key/cryptographic primitive into a compromised state (a usage-suppressed state), in order to suppress its use even if it is currently safe.

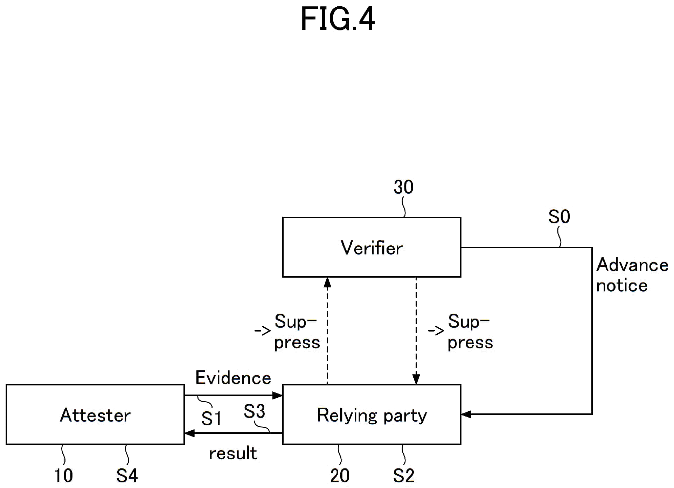

Operation of the verification system according to the first embodiment for solving the above problem will be described with reference to FIG. 4.

In S0, the Verifier 30 notifies the Relying party 20, as advance information, of "identification information of a secret key to be invalidated/identification information of a cryptographic primitive to be invalidated." One reason to invalidate a secret key is, for example, compromise, such as key leakage or insufficient key length.

Further, advance information may also be created so as to intentionally invalidate (or suppress use of) a specific secret key/specific cryptographic primitive for migration to PQC or the like.

The Relying party 20 stores the advance information. By providing notification of this advance information, traffic relating to verification between the Verifier 30 and the Relying party 20 can be suppressed.

The advance information from the Verifier 30 to the Relying party 20 may be updated periodically, or may be updated at a timing when the advance information changes.

In S1, the Attester 10 transmits, to the Relying party 20 as Evidence, "identification information of a secret key/identification information of a cryptographic primitive" for which verification is desired. The identification information of the secret key is, for example, a hash value of the secret key. The identification information of the cryptographic primitive is, for example, an OID.

In S2, the Relying party 20 determines whether the secret key/cryptographic primitive provided by notification as the Evidence is to be invalidated by comparing the received Evidence with the advance information. In S3, the Relying party 20 notifies the Attester 10 of the determination result (verification result) as a result.

When the Attester 10 receives a verification result indicating that the target secret key/cryptographic primitive is to be invalidated, in S4, the Attester 10 invalidates the secret key/cryptographic primitive and does not use the secret key/cryptographic primitive thereafter.

The Relying party 20 may notify the Attester 10 of a result indicating that the secret key/cryptographic primitive is to be invalidated when the Relying party 20 detects an event (compromise or the like) requiring invalidation of the secret key/cryptographic primitive, regardless of whether or not the Evidence has been received from the Attester 10.

### <Effects of the First Embodiment>

According to the technique of the first embodiment, in an environment in which short-lived certificates are used (for example, an mTLS (Mutual Transport Layer Security) environment), it becomes possible to confirm validity of a secret key/cryptographic primitive without performing an on-demand revocation check using OCSP or the like.

Further, according to the technique of the first embodiment, for example, in order to promote migration to PQC or the like, it is possible to invalidate a specific secret key/specific cryptographic primitive.

### (Second Embodiment)

In the second embodiment and the third embodiment, it is assumed that a TasC-PKI certificate and a PQC-PKI certificate coexist in a communication system (verification system).

As described above, in an environment in which a TasC-PKI certificate and a PQC-PKI certificate coexist, assume that, for example, an Attester 11 and an Attester 12 communicate with each other by mTLS. At this time, for example, when the Attester 12 uses PQC-PKI, if the Attester 11 can use both PQC-PKI and TasC-PKI, there is a possibility that appropriate session establishment by mTLS cannot be performed. Therefore, it is necessary to prevent the Attester 11 from using TasC-PKI.

Accordingly, in the second embodiment, use of TasC-PKI by the Attester is suppressed so that the Attester cannot use TasC-PKI.

Processing in the second embodiment will be described in accordance with the procedure shown in FIG. 4.

In S0, the Verifier 30 notifies the Relying party 20, as advance information, of "identification information of a secret key/identification information of a cryptographic primitive" for suppressing use of TasC-PKI.

In S1, the Attester 10 transmits, to the Relying party 20 as Evidence, "identification information of a secret key/identification information of a cryptographic primitive" for which verification is desired.

In S2, the Relying party 20 determines whether use of the secret key/cryptographic primitive provided by notification as the Evidence is to be suppressed by comparing the received Evidence with the advance information. That is, when the secret key/cryptographic primitive provided by notification as the Evidence corresponds to the TasC-PKI provided by notification as the advance information, the Relying party 20 determines that use of the secret key/cryptographic primitive provided by notification as the Evidence is to be suppressed, and creates a result indicating "suppression."

In S3, the Relying party 20 notifies the Attester 10 of the determination result (verification result) as a result.

When the Attester 10 receives a verification result indicating that use of the target secret key/cryptographic primitive is to be suppressed, in S4, the Attester 10 suppresses use of the secret key/cryptographic primitive (that is, use of TasC-PKI).

In the present embodiment, it is assumed that a short-lived certificate is used as the TasC-PKI certificate. Therefore, by introducing PQC-PKI into the Attester before expiration of the TasC-PKI certificate, after expiration of the TasC-PKI certificate, the Attester can perform mTLS communication using PQC with another Attester.

Further, by the above-described processing in the second embodiment, after introduction of PQC-PKI, even before expiration of the TasC-PKI certificate, it is possible to suppress use of TasC-PKI and perform mTLS communication using PQC.

### <Effects of the Second Embodiment>

According to the technique of the second embodiment, use of TasC-PKI in the Attester can be suppressed.

### (Third Embodiment)

Next, the third embodiment will be described. The situation in the third embodiment is assumed to be a situation after use of TasC-PKI in the Attester 10 has been suppressed in the second embodiment.

Assume that, after use of TasC-PKI in the Attester 10 has been suppressed in the second embodiment, a problem occurs when the Attester 10 uses PQC-PKI. In this case, rollback to TasC-PKI becomes necessary.

In the third embodiment, the above rollback is realized by enabling TasC-PKI whose use has been suppressed. By enabling TasC-PKI, it becomes possible to establish an mTLS session again using TasC-PKI.

Processing in the third embodiment will be described in accordance with the procedure shown in FIG. 4.

In S0, the Verifier 30 notifies the Relying party 20, as advance information, of "identification information of a secret key/identification information of a cryptographic primitive" for canceling suppression of use of TasC-PKI.

In S1, the Attester 10 transmits, to the Relying party 20 as an Evidence, "identification information of a secret key/identification information of a cryptographic primitive" for which verification is desired.

In S2, the Relying party 20 determines whether suppression of use of the secret key/cryptographic primitive provided by notification as the Evidence is to be canceled by comparing the received Evidence with the advance information. That is, when the secret key/cryptographic primitive provided by notification as the Evidence corresponds to the TasC-PKI provided by notification in the advance information as being subject to cancellation of suppression of use, the Relying party 20 determines that suppression of use of the secret key/cryptographic primitive provided by notification as the Evidence is to be canceled, and creates a result indicating "cancellation."

In S3, the Relying party 20 notifies the Attester 10 of the determination result (verification result) as a result.

When the Attester 10 receives a verification result indicating that suppression of use of the target secret key/cryptographic primitive is to be canceled, in S4, the Attester 10 cancels suppression of use of the secret key/cryptographic primitive (that is, suppression of use of TasC-PKI).

Assume that the communication counterpart of the Attester 10 is an Attester 13. Here, for example, when the Attester 13 is an Attester that uses only TasC-PKI, by the above procedure, suppression of use of the TasC-PKI secret key/cryptographic primitive is canceled in the Attester 10, whereby TasC-PKI becomes usable in mTLS session negotiation between the Attester 10 and the Attester 13, and it is possible to roll back to the original state (a proven state).

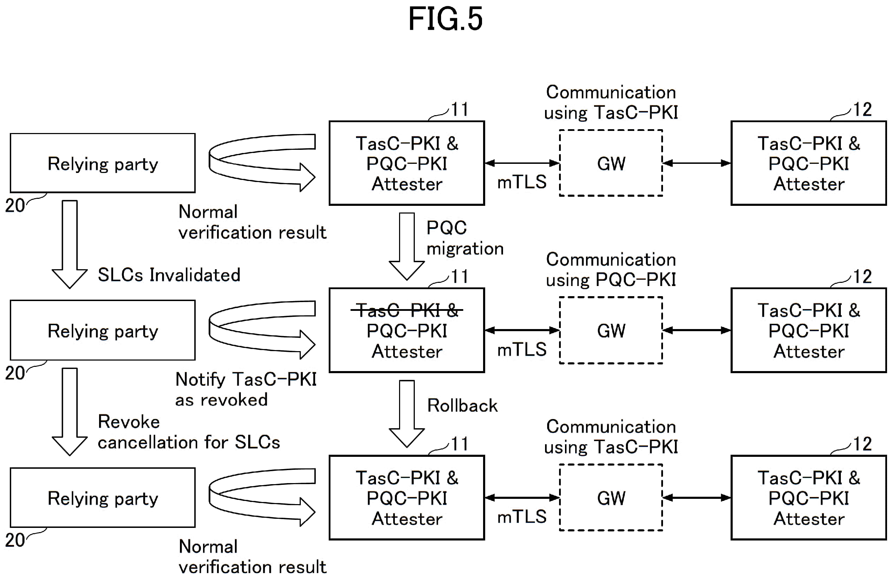

FIG. 5 illustrates another example of a situation in which rollback is performed. In the example of FIG. 5, first, an Attester 11 and an Attester 12 communicate using TasC-PKI.

Subsequently, the TasC-PKI certificate (short-lived certificate (SLC)) of the Attester 11 expires. This expiration may be due to expiration of the validity period, or may be invalidation based on the result from the Relying party 20 before expiration of the validity period.

When the TasC-PKI certificate of the Attester 11 expires, communication using PQC-PKI is performed between the Attester 11 and the Attester 12.

Thereafter, if a failure occurs in communication using PQC-PKI, rollback is performed by the processing described in the third embodiment. That is, the Verifier 30 notifies the Relying party 20 of advance information corresponding to TasC-PKI for which invalidation is to be canceled, and the Relying party 20 notifies the Attester 11, as the verification result, of cancellation of invalidation of TasC-PKI. As a result, communication using TasC-PKI is performed between the Attester 11 and the Attester 12.

### <Effects of the Technique According to the Third Embodiment>

According to the technique of the third embodiment, suppression of use of TasC-PKI in the Attester can be canceled.

### (Apparatus Configuration)

Next, examples of functional configurations of the network node 100 (Attester 10, Relying party 20, Verifier 30, etc.) and the terminal 200 (Attester 10, Relying party 20, Verifier 30, etc.), which execute the processing and operations described above, will be described. The terminal is an example of a network node, but here, it is assumed that the network node 100 is a network node other than the terminal 200.

### <Network Node 100>

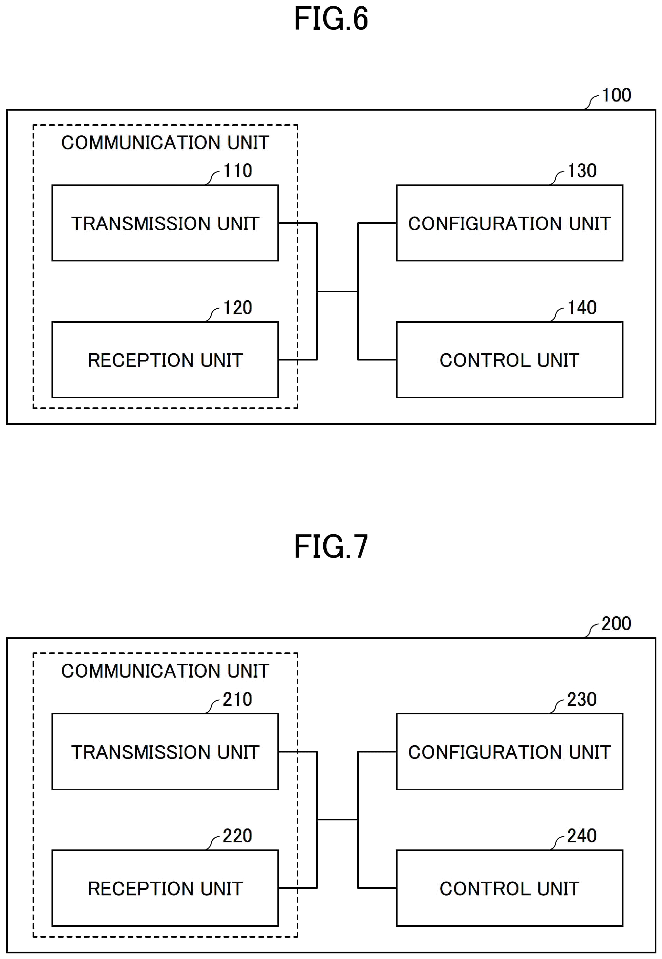

FIG. 6 is a diagram illustrating an example of a functional configuration of the network node 100. As illustrated in FIG. 6, the network node 100 includes a transmission unit 110, a reception unit 120, a configuration unit 130, and a control unit 140. The functional configuration illustrated in FIG. 6 is merely an example. As long as the operation according to the embodiments of the present invention can be performed, the functional division and names of functional units may be arbitrary.

The transmission unit 110 includes a function of generating a signal to be transmitted to the terminal 200 or another network node and transmitting the signal by wire or wirelessly. The reception unit 120 includes a function of receiving various signals transmitted from the terminal 200 or another network node and acquiring, from the received signals, information of, for example, a higher layer. A communication unit including the transmission unit 110 and the reception unit 120 may be configured.

The configuration unit 130 stores, in a storage device, configuration information set in advance and various pieces of configuration information to be transmitted to the terminal 200 or another network node, and reads them from the storage device as necessary. The control unit 140 controls the network node 100. A functional unit relating to signal transmission in the control unit 140 may be included in the transmission unit 110, and a functional unit relating to signal reception in the control unit 140 may be included in the reception unit 120. The transmission unit 110 and the reception unit 120 may also be referred to as a transmitter and a receiver, respectively.

### <Terminal 200>

FIG. 7 is a diagram illustrating an example of a functional configuration of the terminal 200. As illustrated in FIG. 7, the terminal 200 includes a transmission unit 210, a reception unit 220, a configuration unit 230, and a control unit 240. The functional configuration illustrated in FIG. 7 is merely an example. As long as the operation according to the embodiments of the present invention can be performed, the functional division and names of functional units may be arbitrary.

The transmission unit 210 creates a transmission signal from transmission data and wirelessly transmits the transmission signal. The reception unit 220 wirelessly receives various signals and acquires higher-layer signals from received physical-layer signals. The reception unit 220 also has a function of receiving, from a network node, an NR-PSS, an NR-SSS, an NR-PBCH, a DL/UL control signal, a reference signal, and the like. A communication unit including the transmission unit 210 and the reception unit 220 may be configured.

The configuration unit 230 stores, in a storage device, various pieces of configuration information received from a network node by the reception unit 220, and reads them from the storage device as necessary. The configuration unit 230 also stores configuration information set in advance.

The control unit 240 controls the terminal 200. A functional unit relating to signal transmission in the control unit 240 may be included in the transmission unit 210, and a functional unit relating to signal reception in the control unit 240 may be included in the reception unit 220. The transmission unit 210 and the reception unit 220 may also be referred to as a transmitter and a receiver, respectively.

### (Hardware Configuration)

The block diagrams (FIGS. 6 and 7) used in the description of the embodiment described above illustrate the block of functional units. Such functional blocks (configuration parts) are attained by at least one arbitrary combination of hardware and software. In addition, an attainment method of each of the functional blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

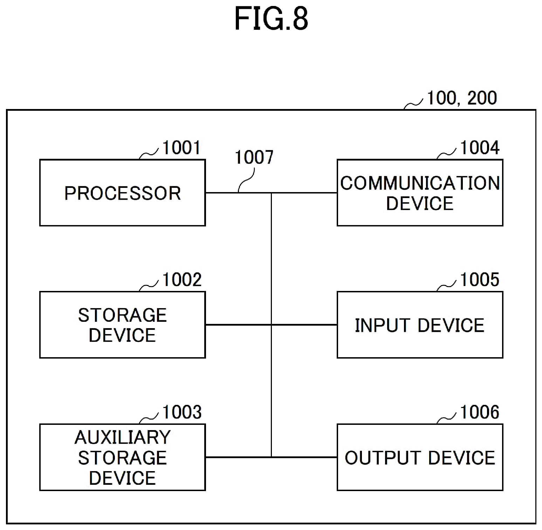

For example, the network node 100, and the terminal 200 and the like in one embodiment of this disclosure may function as a computer for performing the processing of a radio communication method of this disclosure. FIG.8 is a diagram illustrating an example of a hardware configuration of the network node 100 and the terminal 200 and the like according to one embodiment of this disclosure. The network node 100 and the terminal 200 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the network node 100 and the terminal 200 and the like may be configured to include one or a plurality of apparatuses illustrated in the drawings, or may be configured not to include a part of the apparatuses.

Each function of the network node 100 and the terminal 200 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the network node 100 shown in Fig.6 may be attained by a control program that is stored in the storage device 1002 and is operated by the processor 1001. Also, for example, the control unit 240 of the terminal 200 shown in Fig.7 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wired network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the network node 100 and the terminal 200 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

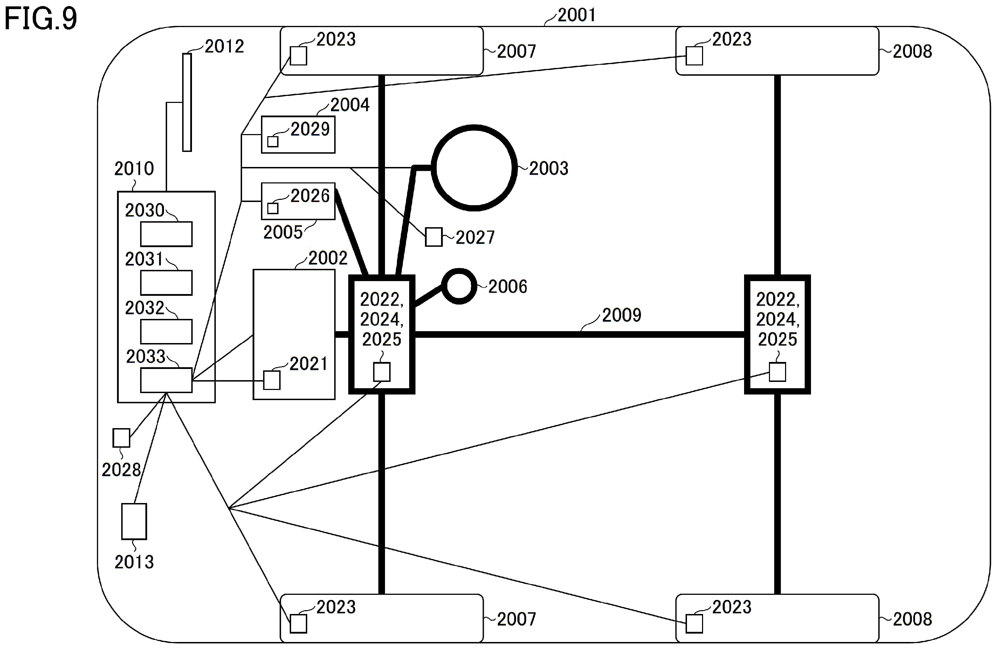

FIG. 9 shows a configuration example of a vehicle 2001. As shown in FIG. 9, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. The aspect/embodiment described in the present disclosure may be applied to a communication apparatus mounted on the vehicle 2001, and may be applied to, for example, the communication module 2013. For example, the network node 100, or the terminal 200, may be included in the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, etc.) that receives input from external sources and may also include an output device (for example, a display, a speaker, an LED lamp, a touch panel, etc.) that provides output to external destinations.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a terminal, a network node, or the like.

The communication module 2013 may transmit at least one of, signals from the various sensors 2021 to 2028 described above input to the electronic control unit 2010, information obtained based on the signals, and information based on input from the outside (user) obtained via the information service unit 2012 to an external device via radio communication. The electronic control unit 2010, the various sensors 2021 to 2028, the information service unit 2012, and the like may be referred to as an input unit that receives an input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to a device such as a display or a speaker based on the PDSCH (or data/information decoded from the PDSCH) received by the communication module 2013). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

Further, when the communication module 2013 includes the network node 100 (or the terminal 200), the communication module 2013 can execute the operation of the above-described network node 100 (or terminal 200).

The present specification discloses at least the configurations according to Supplementary Note below.

### <Supplementary Note>

### (Clause 1)

A network node including:
a reception unit configured to receive, from a first network node, identification information of a secret key or identification information of a cryptographic primitive;
a control unit configured to determine validity of the secret key or the cryptographic primitive based on advance information received from a second network node; and
a transmission unit configured to transmit a determination result by the control unit to the first network node.

### (Clause 2)

The network node according to Clause 1, wherein the secret key or the cryptographic primitive is a secret key or a cryptographic primitive corresponding to a short-lived certificate.

### (Clause 3)

The network node according to Clause 1 or 2, wherein the advance information is identification information indicating a secret key or a cryptographic primitive to be invalidated.

### (Clause 4)

The network node according to any one of Clauses 1 to 3, wherein the advance information is information corresponding to a specific public-key cryptographic scheme for which use is to be suppressed.

### (Clause 5)

The network node according to any one of Clauses 1 to 4, wherein the advance information is information corresponding to a specific public-key cryptographic scheme for which cancellation of suppression of use is to be performed.

### (Clause 6)

A communication method executed by a network node, the communication method including:
receiving, from a first network node, identification information of a secret key or identification information of a cryptographic primitive;
determining validity of the secret key or the cryptographic primitive based on advance information received from a second network node; and
transmitting a determination result in the determining to the first network node.

According to any of Clauses 1 to 6, there is provided a technique that makes it possible for a network node to appropriately control use of a secret key or a cryptographic primitive. According to Clause 2, when a short-lived certificate is used, it is possible to appropriately control use of the certificate. According to Clause 3, it is possible to appropriately identify, using the advance information, the secret key or the cryptographic primitive to be invalidated. According to Clause 4, it is possible to suppress use of a specific public-key cryptosystem. According to Clause 5, it is possible to resume use of a specific public-key cryptographic scheme whose use has been suppressed.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the network node 100 and the terminal 200 have been described by using a functional block diagram, but such an apparatus may be attained by hardware, software, or a combination thereof. Each of software that is operated by a processor of the network node 100 and software that is operated by a processor of the terminal 200 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiment described in this disclosure may be applied to a system using long term evolution (LTE), LTE-advanced (LTE-A), SUPER 3G, IMT-advanced, a 4th generation mobile communication system (4G), a 5th generation mobile communication system (5G), 6th generation mobile communication system (6G),xth generation mobile communication system (xG) (xG, where x is, for example, an integer or a decimal), FRA (Future Radio Access),NR (New Radio), New Radio Access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, generated, or specified on the basis thereof. In addition, a combination of a plurality of systems (for example, a combination of at least 5G and one of LTE and LTE-A, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Specific operations that have been described in the present specification as being performed by a base station may, depending on circumstances, be performed by an upper node. In a network including one or more network nodes having a base station, it is obvious that various operations performed for communication with the terminal 200 may be performed by at least one of the base station and another network node other than the base station (for example, MME, S-GW, or the like, but not limited thereto). Above, a case where there is one other network node other than the base station has been exemplified, but the other network node may be a combination of a plurality of other network nodes (for example, MME and S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), and at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In the present disclosure, the transmission of information from the base station to the terminal may be read as the base station instructing the terminal to perform control and operation based on the information.

In the present disclosure, the terms "Mobile Station (MS)", "user terminal", "User Equipment (UE)", "terminal", and the like may be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the network node 100 and the terminal 200 may be referred to as a transmitting apparatus, a receiving apparatus, a communication apparatus, and the like. Note that, at least one of the network node 100 and the terminal 200 may be a device that is mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multicopters, quadcopters, balloons, and objects mounted thereon. Moreover, the mobile object may be an autonomous mobile object that operates based on operation commands. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the network node 100 and the terminal 200 also includes an apparatus that is not necessarily moved at the time of a communication operation. For example, at least one of the network node100 and the terminal 200 may be an internet of things (IoT) device such as a sensor.

Further, in the present disclosure, a base station may be read as a user terminal. For example, each aspect/embodiment of the present disclosure may be applied to a configuration in which communication between a base station and a user terminal is replaced with communication between a plurality of terminals 200 (for example, also referred to as D2D (Device-to-Device), V2X (Vehicle-to-Everything), or the like). In this case, the terminal 200 may have the functions of the base station described above. Further, terms such as "uplink" and "downlink" may be read as terms corresponding to inter-terminal communication (for example, "side"). For example, an uplink channel and a downlink channel may be read as side channels.

Similarly, in the present disclosure, a user terminal may be read as a base station. In this case, the base station may have the functions of the user terminal described above.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some nonlimiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first", "second", and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be an exclusive-OR.

In this disclosure, for example, in a case where articles such as "a", "an", and "the" are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

10 Attester
20 Relying party
30 Verifier
100 Network node
110 Transmission unit
120 Reception unit
130 Configuration unit
140 Control unit
200 Terminal
210 Transmission unit
220 Reception unit
230 Configuration unit
240 Control unit
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Rotational speed sensor
2023 Air pressure sensor
2024 Vehicle speed sensor
2025 Acceleration sensor
2026 Brake pedal sensor
2027 Shift lever sensor
2028 Object detection sensor
2029 Accelerator pedal sensor
2030 Driving assistance system unit
2031 Microprocessor
2032 Memory (ROM, RAM)
2033 Communication port (IO port)

## Claims

1. A network node comprising:
a reception unit configured to receive, from a first network node, identification information of a secret key or identification information of a cryptographic primitive;
a control unit configured to determine validity of the secret key or the cryptographic primitive based on advance information received from a second network node; and
a transmission unit configured to transmit a determination result by the control unit to the first network node.

2. The network node as claimed in claim 1, wherein the secret key or the cryptographic primitive is a secret key or a cryptographic primitive corresponding to a short-lived certificate.

3. The network node as claimed in claim 1, wherein the advance information is identification information indicating a secret key or a cryptographic primitive to be invalidated.

4. The network node as claimed in claim 1, wherein the advance information is information corresponding to a specific public-key cryptographic scheme for which use is to be suppressed.

5. The network node as claimed in claim 1, wherein the advance information is information corresponding to a specific public-key cryptographic scheme for which cancellation of suppression of use is to be performed.

6. A communication method executed by a network node, the communication method comprising:
receiving, from a first network node, identification information of a secret key or identification information of a cryptographic primitive;
determining validity of the secret key or the cryptographic primitive based on advance information received from a second network node; and
transmitting a determination result in the determining to the first network node.
